(19) Europäisches Patentamt
European Patent Office
Office européen des brevets

(11)  **EP 2 619 894 B1**

(12)  **EUROPÄISCHE PATENTSCHRIFT**

(45) Veröffentlichungstag und Bekanntmachung des Hinweises auf die Patenterteilung:
**06.03.2019   Patentblatt 2019/10**

(51) Int Cl.:
*B60L 11/18* *(2006.01)*        *H02M 7/501* *(2007.01)*
*H02J 7/00* *(2006.01)*        *H02M 7/483* *(2007.01)*

(21) Anmeldenummer: **11758150.4**

(22) Anmeldetag: **24.08.2011**

(86) Internationale Anmeldenummer:
**PCT/EP2011/064552**

(87) Internationale Veröffentlichungsnummer:
**WO 2012/038174 (29.03.2012 Gazette 2012/13)**

(54) **VERFAHREN ZUM EINSTELLEN EINER SOLL-AUSGANGSSPANNUNG EINES ENERGIEVERSORGUNGSZWEIGES EINES STEUERBAREN ENERGIESPEICHERS**

METHOD FOR SETTING A DESIRED OUTPUT VOLTAGE IN A POWER SUPPLY BRANCH OF A CONTROLLABLE ENERGY STORE

PROCÉDÉ DE RÉGLAGE D'UNE TENSION DE SORTIE THÉORIQUE D'UNE BRANCHE D'ALIMENTATION EN ÉNERGIE D'UN ACCUMULATEUR D'ÉNERGIE CONTRÔLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2010   DE 102010041059**

(43) Veröffentlichungstag der Anmeldung:
**31.07.2013   Patentblatt 2013/31**

(73) Patentinhaber: **Robert Bosch GmbH**
**70442 Stuttgart (DE)**

(72) Erfinder:
• **FEUERSTACK, Peter**
**71642 Ludwigsburg (DE)**
• **WEISSENBORN,Erik**
**70374 Stuttgart (DE)**

(56) Entgegenhaltungen:
**WO-A1-2011/128136        DE-A1- 10 103 031**
**US-A- 3 100 851        US-A1- 2007 034 246**

**EP 2 619 894 B1**

## Beschreibung

Die Erfindung betrifft ein Verfahren zum Einstellen einer Soll-Ausgangsspannung eines Energieversorgungszweiges eines steuerbaren Energiespeichers.

Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027857 und DE 10 2010 027861 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert. Zum Zwecke der Offenbarung werden diese beiden älteren Anmeldungen vollumfänglich in die vorliegende Anmeldung einbezogen.

US 3 100 851 A offenbart einen Wechselrichter. In Abhängigkeit der auszugebenden Spannung werden hierzu eine oder mehrere Gleichspannungsquellen in Serie zwischen einem Verbraucher und einem Bezugspotential geschaltet.

WO 2011/128136 offenbart eine Batterie mit einer variablen Ausgangsspannung. Zur anpassung der Ausgangsspannung umfasst die Batterie in jedem Batteriestrang mehrere Batteriemodule mit Batteriezellen, die in den Batteriestrang eingekoppelt werden können.

Offenbarung der Erfindung

Die vorliegende Erfindung schafft ein Verfahren gemäß den Merkmalen des unabhängigen Patentanspruchs 1.

Vorteile der Erfindung

Die Gesamt-Ausgangsspannungen der Energieversorgungszweige eines derartigen steuerbaren Energiespeichers werden bestimmt durch den jeweiligen Schaltzustand der steuerbaren Schaltelemente der Koppeleinheiten und können stufig eingestellt werden. Die Stufung ergibt sich dabei in Abhängigkeit von der Spannung der einzelnen Energiespeichermodule. Geht man von einer bevorzugten Ausführungsform gleichartig ausgestalteter Energiespeichermodule aus, so ergibt sich eine maximal mögliche Gesamt-Ausgangsspannung aus der Spannung eines einzelnen Energiespeichermoduls mal der Anzahl m der pro Energieversorgungszweig in Reihe geschalteten Energiespeichermodule. Werden elektrische Maschinen mit einem derartigen steuerbaren Energiespeicher angesteuert, so kann es insbesondere bei kleinen Ausgangsspannungen aufgrund der Stufigkeit der Ausgangsspannung zu Drehmomentschwankungen der elektrischen Maschine kommen.

Die Erfindung basiert auf der Grundidee, mindestens eine Koppeleinheit impulsförmig anzusteuern, wobei die der mindestens einen Koppeleinheit jeweils zugeordneten Energiespeicherzellen während einer Impulsdauer in den jeweiligen Energieversorgungszweig geschaltet werden und während einer Pausendauer überbrückt werden. Durch geeignete Wahl des Tastgrades kann auf diese Weise der arithmetische Mittelwert der Ausgangsspannung eines Energieversorgungszweiges derart eingestellt werden, dass er der Soll-Ausgangsspannung entspricht. Die Ausgangsspannung des Energieversorgungszweiges lässt sich damit stufenlos einstellen. Eine an einen derart betriebenen steuerbaren Energiespeicher angeschlossene elektrische Maschine stellt eine induktive Last dar. Der sich durch diese induktive Last einstellende Strom entspricht einem Strom, wie er sich durch direktes Anlegen einer Spannung mit dem Wert des arithmetischen Mittelwertes einstellen würde. Unerwünschte Drehmomentabweichungen werden auf diese Weise vermieden.

Diese Art der Steuerung hat den Vorteil, dass Zwischenwerte der an sich nur stufig einstellbaren Soll-Ausgangsspannung eines Energieversorgungszweiges durch impulsförmige Ansteuerung einer einzigen Koppeleinheit einstellbar sind. Es sei aber darauf hingewiesen, dass die Soll-Ausgangsspannung auch durch impulsförmige Ansteuerung mehrerer Koppeleinheiten eingestellt werden kann. Entscheidend ist lediglich, dass der arithmetische Spannungs-Mittelwert aller dauerhaft oder zeitweise in den jeweiligen Energieversorgungszweig geschalteten Energiespeicherzellen der gewünschten Soll-Ausgangsspannung entspricht.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen

Es zeigen:

Fig. 1    eine schematische Darstellung einer elektrischen Maschine mit einer steuerbaren Energieversorgung

Fig. 2    eine grafische Darstellung der einstellbaren Ausgangsspannungen eines Energieversorgungszweiges ohne impulsförmige Ansteuerung und

Fig. 3    eine grafische Darstellung der einstellbaren Ausgangsspannungen eines Energieversorgungszweiges mit impulsförmiger Ansteuerung.

Ausführungsformen der Erfindung

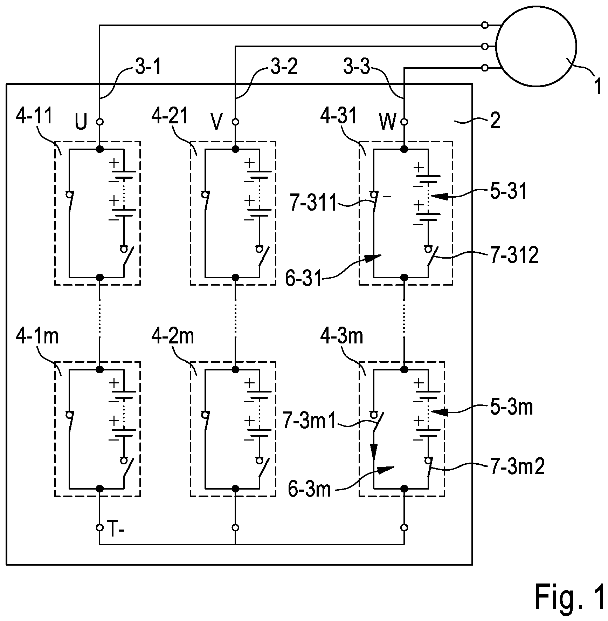

An eine dreiphasige elektrische Maschine 1 ist ein steuerbarer Energiespeicher 2 angeschlossen (Figur 1). Der steuerbare Energiespeicher 2 umfasst drei Energieversorgungszweige 3-1, 3-2 und 3-3, welche einerseits mit einem Bezugspotential T- (Bezugsschiene), welches in der dargestellten Ausführungsform ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In der dargestellten Ausführungsvariante werden die Koppeleinheiten 6 jeweils durch zwei steuerbare Schaltelemente 7-311 und 7-312 bis 7-3m1 und 7-3m2 gebildet. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen beider Schaltelemente 7 einer Koppeleinheit 6 zu unterbrechen. Alternativ können die Energiespeicherzellen 5 durch Schließen jeweils eines der Schaltelemente 7 einer Koppeleinheit 6 entweder überbrückt werden, z.B. Schließen des Schalters 7-311 oder in den jeweiligen Energieversorgungszweig 3 geschaltet werden, z.B. Schließen des Schalters 7-312.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 ist im dargestellten Ausführungsbeispiel als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

Im dargestellten Ausführungsbeispiel weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

Im dargestellten Ausführungsbeispiel werden die Koppeleinheiten 6 jeweils durch zwei steuerbare Schaltelemente 7 gebildet. Die Koppeleinheiten 6 können aber auch durch mehr oder weniger steuerbare Schaltelemente realisiert sein, solange die notwendigen Funktionen (Überbrücken der Energiespeicherzellen und Schalten der Energiespeicherzellen in den Energieversorgungszweig) realisierbar sind. Beispielhafte alternative Ausgestaltungen einer Koppeleinheit ergeben sich aus den älteren Anmeldungen DE 10 2010 027857 und DE 10 2010 027861. Darüber hinaus ist es aber auch denkbar, dass die Koppeleinheiten Schaltelemente in Vollbrückenschaltung aufweisen, was die zusätzliche Möglichkeit einer Spannungsumkehr am Ausgang des Energiespeichermoduls bietet.

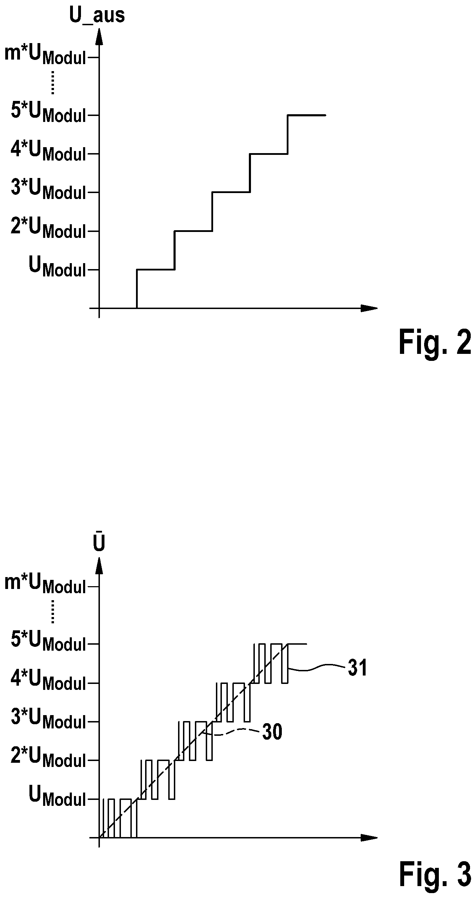

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und kann stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung U_aus aus der Spannung eines einzelnen Energiespeichermoduls 4 mal der Anzahl m der pro Energieversorgungszweig in Reihe geschalteten Energiespeichermodule 4. Eine derartige stufig-einstellbare Ausgangsspannung eines Energieversorgungszweiges ist in Figur 2 schematisch dargestellt.

Im Folgenden wird exemplarisch die Einstellung einer Soll-Ausgangsspannung für einen einzelnen Energieversorgungszweig 3, nämlich den Energieversorgungszweig 3-3 beschrieben. Dabei sei angenommen, dass die Energiespeicherzellen 5-31 des ersten Energiespeichermoduls 4-31 des Energieversorgungszweiges 3-3 bei dauerhaftem Schalten in den Energieversorgungszweig 3-3 eine Ausgangsspannung U1 liefern und dass die Energiespeicherzellen 5-3m des m-ten Energiespeichermoduls 4-3m des Energieversorgungszweiges 3-3 bei dauerhaftem Schalten in den Energieversorgungszweig 3-3 eine Ausgangsspannung Um, mit Um =U2-U1, liefern, so dass ein dauerhaftes Zuschalten der Energiespeicherzellen beider Energiespeichermodule 4-31 und 4-3m eine Ausgangsspannung U2 zur Folge hat. Des Weiteren sei angenommen, dass eine Soll-Ausgangsspannung U_Soll eingestellt werden soll, welche zwischen den Spannungswerten U1 und U2 liegt.

Diese Soll-Ausgangsspannung U_Soll wird nun erfindungsgemäß dadurch eingestellt, dass die Koppeleinheit 6-31, welche den Energiespeicherzellen 5-31 zugeordnet sind, durch eine nicht dargestellt Steuereinheit derart angesteuert wird, dass die Energiespeicherzellen 5-31 dauerhaft in den Energieversorgungszweig 3-3 geschaltet werden. Dies wird konkret dadurch erreicht, dass das Schaltelement 7-312 dauerhaft geschlossen wird, wohingegen das Schaltelement 7-311 dauerhaft geöffnet wird. Auf diese Weise wird ein erster Anteil der Soll-Ausgangsspannung U_Soll mit dem Spannungswert U1 zur Verfügung gestellt. Die Koppeleinheit 6-3m wird durch die nicht dargestellte Steuereinheit impulsförmig mit einem Tastverhältnis von

$$T = \frac{U\_Soll - U1}{U2 - U1}$$

angesteuert. Dies heißt konkret, dass während einer Impulsdauer das Schaltelement 7-3m2 geschlossen und das Schaltelement 7-3m1 geöffnet wird und während einer Pausendauer das Schaltelement 7-3m2 geöffnet und das Schaltelement 7-3m1 geschlossen wird. Auf diese Weise wird ein zweiter Anteil der Soll-Ausgangsspannung U_Soll zur Verfügung gestellt. Alle übrigen Energiespeicherzellen 5-32 bis 5-3(m-1) in dem Energieversorgungszweig 3-3 werden zur Einstellung der Soll-Ausgangsspannung U_Soll nicht benötigt. Die zugehörigen Koppeleinheiten 6-32 bis 6-3(m-1) werden daher derart gesteuert, dass die zugeordneten Energiespeicherzellen 5-32 bis 5-3(m-1) dauerhaft überbrückt werden. Damit er gibt sich für den Energieversorgungszweig 3-3 der arithmetische Mittelwert $\overline{U}$ der Ausgangsspannung zu

$$\overline{U} = U1 + T \cdot Um = U1 + \frac{U\_Soll - U1}{U2 - U1} \cdot (U2 - U1) = U\_Soll \,.$$

Eine an einen derart betriebenen steuerbaren Energiespeicher 2 angeschlossene elektrische Maschine 1 stellt eine induktive Last dar, wobei der sich durch diese induktive Last einstellende Strom einem Strom entspricht, wie er sich durch direktes Anlegen einer Spannung mit dem Wert des arithmetischen Mittelwertes einstellen würde. Das erfindungsgemäße Verfahren ermöglicht folglich eine stufenlose Einstellung der Ausgangsspannung der Energieversorgungszweige 3-1 bis 3-3.

Figur 3 zeigt schematisch die mit Hilfe des erfindungsgemäßen Verfahrens einstellbaren Ausgangsspannungen an einem Energieversorgungszweig 3. Die stufenlos einstellbare Ausgangsspannung ist dabei mit dem Bezugszeichen 30 gekennzeichnet. Eine prinzipielle Darstellung der impulsförmigen Ansteuersignale ist durch das Bezugszeichen 31 gekennzeichnet. Analog zu der Darstellung in Figur 2 wird auch bei der Darstellung in Figur von der bevorzugten Ausführungsform gleichartig ausgestalteter Energiespeichermodule 4 aus. Für die Anwendbarkeit der Erfindung ist dies aber nicht erforderlich.

Außer durch die konkret beschriebene Form der Ansteuerung der Koppeleinheiten 6 kann die Soll-Ausgangsspannung U_Soll auch durch alternative Formen der Ansteuerung eingestellt werden. So kann der erste Anteil der Soll-Ausgangsspannung U_Soll mit dem Spannungswert U1 selbstverständlich auch durch ein anderes Energiespeichermodul als das Energiespeichermodul 4-31 geliefert werden. Voraussetzung ist nur, dass die Energiespeicherzellen 5 des entsprechenden Energiespeichermoduls 4 eben gerade die Spannung U1 liefern können. Ebenso kann auch eine andere Koppeleinheit als die Koppeleinheit 6-3m impulsförmig angesteuert werden. Dabei ist lediglich zu beachten, dass der Tastgrad entsprechend angepasst wird. Auch ist es denkbar, nicht nur eine Koppeleinheit 6 impulsförmig anzusteuern, sondern mehrere Koppeleinheiten 6 mit geeigneten Tastgraden anzusteuern. Entscheidend ist immer nur, dass sich ein arithmetischer Spannungs-Mittelwert aller dauerhaft oder zeitweise in den Energieversorgungszweig 3 geschalteten Energiespeicherzellen 5 ergibt, welcher der gewünschten Soll-Ausgangsspannung U_Soll entspricht.

## Patentansprüche

1. Verfahren zum Einstellen einer Soll-Ausgangsspannung U_Soll eines Energieversorgungszweiges (3-3) eines steuerbaren Energiespeichers (2), welcher der Steuerung und der elektrischen Energieversorgung einer n-phasigen elektrischen Maschine (1), mit $n \geq 1$, dient, wobei

   - der steuerbare Energiespeicher (2) n parallele Energieversorgungszweige (3-1, 3-2, 3-3) aufweist, welche

      - jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
      - einerseits mit einer Bezugsschiene (T-) verbindbar sind und
      - andererseits mit jeweils einer Phase (U, V, W) der elektrischen Maschine (1) verbindbar sind,

   - die Koppeleinheiten (6) in Abhängigkeit von Steuersignalen die jeweils zugeordneten Energiespeicherzellen (5) durch Schließen zweiter Schaltelemente (7, 7-312, 7-3m2) und Öffnen erster Schaltelemente (7, 7-311, 7-3m1) in den jeweiligen Energieversorgungszweig (3-1; 3-2; 3-3) schalten oder die jeweils zugeordneten Energiespeicherzellen (5) durch Schließen erster Schaltelemente (7, 7-311, 7-3m1) und Öffnen zweiter Schaltelemente (7, 7-312, 7-3m2) der jeweiligen Koppeleinheit (6) überbrücken,

   bei dem mindestens eine Koppeleinheit (6-3m) derart impulsförmig angesteuert wird, dass der arithmetische Mittelwert der Ausgangsspannung eines Energieversorgungszweiges (3-3) der Soll-Ausgangsspannung U_Soll entspricht, wobei die der mindestens einen Koppeleinheit (6-3m) jeweils zugeordneten Energiespeicherzellen (5-3m) während einer Impulsdauer in den jeweiligen Energieversorgungszweig (3-3) geschaltet werden und während einer Pausendauer nicht in den jeweiligen Energieversorgungszweig (3-3) geschaltet werden,
   **dadurch gekennzeichnet, dass**
   eine Soll-Ausgangsspannung U_Soll eines Energieversorgungszweiges (3-3), welche zwischen zwei durch dauerhaftes Schalten von Energiespeicherzellen (5) in den Energieversorgungszweig (3-3) oder von nicht in den Energieversorgungszweig (3-3) geschalteten Energiespeicherzellen (5) erreichbaren Ausgangs-Spannungswerten U1 und U2 liegt, dadurch eingestellt wird, dass

   - Koppeleinheiten (6-11) von Energiespeichermodulen (4-11), welche zu dem Ausgangsspannungswert U1 führen, derart gesteuert werden, das die jeweiligen Energiespeicherzellen (5-11) dauerhaft in den Energieversorgungszweig (3-3) geschaltet werden und
   - eine Koppeleinheit (6-3m), welche Energiespeicherzellen (5-3m) zugeordnet ist, die bei dauerhaftem Zuschalten in den Energieversorgungszweig (3-3) den AusgangsSpannungswert von U1 auf U2 erhöhen würden, impulsförmig mit einem Tastgrad T von

$$T = \frac{U\_Soll - U1}{U2 - U1}$$

angesteuert wird.

**Claims**

**1.** Method for setting a setpoint output voltage U_setpoint of an energy supply branch (3-3) of a controllable energy store (2), which serves to control and supply electrical energy to an n-phase electric machine (1), where n ≥ 1, wherein

- the controllable energy store (2) has n parallel energy supply branches (3-1, 3-2, 3-3), which

• each have at least two energy storage modules (4) connected in parallel, which each comprise at least one electrical energy storage cell (5) having an associated controllable coupling unit (6),
• can be connected on one side to a reference rail (T-) and
• can be connected on the other side to in each case one phase (U, V, W) of the electric machine (1),

- depending on control signals, the coupling units (6) connect the respectively associated energy storage cells (5) into the respective energy supply branch (3-1; 3-2; 3-3) by closing second switching elements (7, 7-312, 7-3m2) and opening first switching elements (7, 7-311, 7-3ml) or bypass the respectively associated energy storage cells (5) by closing first switching elements (7, 7-311, 7-3ml) and opening second switching elements (7, 7-312, 7-3m2) of the respective coupling unit (6),

in which at least one coupling unit (6-3m) is actuated in a pulsed manner in such a way that the arithmetic mean value of the output voltage of an energy supply branch (3-3) corresponds to the setpoint output voltage U_setpoint, wherein the energy storage cells (5-3m) respectively associated with the at least one coupling unit (6-3m) are connected into the respective energy supply branch (3-3) during a pulse duration and are not connected into the respective energy supply branch (3-3) during a pause duration,
**characterized in that**
a setpoint output voltage U_setpoint of an energy supply branch (3-3), which is between two output voltage values U1 and U2 that can be achieved through permanent connection of energy storage cells (5) into the energy supply branch (3-3) or of energy storage cells (5) not connected into the energy supply branch (3-3), is set by virtue of

- coupling units (6-11) of energy storage modules (4-11), which lead to the output voltage value U1, being controlled in such a way that the respective energy storage cells (5-11) are connected permanently into the energy supply branch (3-3) and
- a coupling unit (6-3m), which is associated with energy storage cells (5-3m) that would increase the voltage value from U1 to U2 in the case of permanent connection into the energy supply branch (3-3), being actuated in a pulsed manner with a duty cycle T of

$$T = \frac{U\_setpoint - U1}{U2 - U1}.$$

**Revendications**

**1.** Procédé de réglage d'une tension de sortie théorique U_Soll d'une branche d'alimentation en énergie (3-3) d'un accumulateur d'énergie (2) commandable qui assure la commande et l'alimentation en énergie électrique d'une machine électrique à n phases (1), où n ≥ 1, dans lequel

- l'accumulateur d'énergie (2) commandable comporte n branches d'alimentation en énergie (3-1, 3-2, 3-3) parallèles, qui comportent respectivement

• au moins deux modules accumulateurs d'énergie (4) montés en série et comprenant respectivement au moins un élément accumulateur d'énergie électrique (5) doté d'une unité de couplage (6) commandable associée,
• et qui peuvent être reliées, d'une part, à un rail de référence (T-) et
• d'autre part, respectivement à une phase (U, V, W) de la machine électrique (1),

- les unités de couplage (6) connectent les éléments accumulateurs d'énergie (5) respectivement associés à la branche d'alimentation respective (3-1 ; 3-2 ; 3-3) en fonction de signaux de commande en fermant des seconds éléments de commutation (7, 7-312, 7-3m2) et en ouvrant des premiers éléments de commutation (7, 7-311, 7-3m1) ou établissent un pontage entre les éléments accumulateurs d'énergie (5) respectivement associés en fermant des premiers éléments de commutation (7, 7-311, 7-3m1) et en ouvrant des seconds éléments de commutation (7, 7-312, 7-3m2) de l'unité de couplage respective (6), dans lequel au moins une unité de couplage (6-3m) est commandée par impulsions de telle sorte que la valeur moyenne arithmétique de la tension de sortie d'une branche d'alimentation en énergie (3-3) corresponde à la tension de sortie théorique U_Soll, dans lequel les éléments accumulateurs d'énergie (5-3m) respectivement associés à ladite au moins une unité de couplage (6-3m) sont connectés à la branche d'alimentation en énergie (3-3) respective pendant une durée d'impulsion et ne sont pas connectés à ladite branche d'alimentation en énergie (3-3) respective pendant une durée de pause,

**caractérisé en ce qu'**une tension de sortie souhaitée U_Soll d'une branche d'alimentation en énergie (3-3) se situant entre deux valeurs de tension de sortie U1 et U2, qui peut être obtenue par connexion permanente d'éléments accumulateurs d'énergie (5) à la branche d'alimentation en énergie (3-3) ou d'éléments accumulateurs d'énergie (5) non connectés à la branche d'alimentation en énergie (3-3), est réglée

- en commandant des unités de couplage (6-11) d'éléments accumulateurs d'énergie (4-11), qui conduisent à la valeur de tension de sortie U1, de telle sorte que les éléments accumulateurs d'énergie (5-11) respectifs soient connectés en permanence à la branche d'alimentation en énergie (3-3) et
- en commandant par impulsions une unité de couplage (6-3m), associée à des éléments accumulateurs d'énergie (5-3m) qui augmenteraient la valeur de tension de sortie de U1 à U2 lors d'une connexion permanente à la branche d'alimentation en énergie (3-3), avec un rapport cyclique T de

$$T = \frac{U\_Soll - U1}{U2 - U1}.$$

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010027857
- DE 102010027861
- US 3100851 A
- WO 2011128136 A